# EUROPEAN PATENT APPLICATION

(11) **EP 4 606 509 A1**
(43) Date of publication of application: **27.08.2025**
(21) Application number: 23891323.0
(22) Date of filing: 26.10.2023
(51) Int. Cl.: B23K 11/30, B23K 11/11

(54) **RESISTANCE WELDING DEVICE**

(30) Priority: 17.11.2022 JP 2022183903
(71) Applicant: MAZDA MOTOR CORPORATION, Hiroshima 730-8670 (JP)
(72) Inventor: YAMAGUCHI Kojiro, Aki-gun, Hiroshima 730-8670 (JP); SATO Kouji, Aki-gun, Hiroshima 730-8670 (JP); KAWAGUCHI Hideaki, Aki-gun, Hiroshima 730-8670 (JP); IENAGA Atsushi, Aki-gun, Hiroshima 730-8670 (JP); MORIWAKI Motonori, Aki-gun, Hiroshima 730-8670 (JP); IWAMOTO Tomoyuki, Aki-gun, Hiroshima 730-8670 (JP); SATO Hiroki, Aki-gun, Hiroshima 730-8670 (JP); NAKAI Masanori, Aki-gun, Hiroshima 730-8670 (JP); UJIHIRA Naoki, Aki-gun, Hiroshima 730-8670 (JP)
(74) Representative: Müller-Boré & Partner Patentanwälte PartG mbB
(86) International application number: PCT/JP2023/038700
(87) International publication number: WO 2024/106168

(57) **Abstract**

A resistance welding device welds a plurality of stacked welding target members (101 and 102) of a workpiece (100) by pressurizing the workpiece and supplying power to the workpiece. The resistance welding device includes at least one electrode (2) that has a tip end surface (211) configured to be in contact with the workpiece and that is configured to pressurize the workpiece and supply power to the workpiece. The electrode has, at an intermediate portion between the tip end surface and a base end of the electrode, at least one slit (41 to 44) that opens to an outer circumferential surface of the electrode and that extends in a circumferential direction in a plane intersecting a central axis (X) direction of the electrode.

## Description

### TECHNICAL FIELD

The technique disclosed here relates to a resistance welding device.

### BACKGROUND ART

Patent Document 1 describes a conventional spot welding device. The spot welding device includes a robot and a welding gun. The robot holds the welding gun and positions the welding gun at a welding location of a welding target member. An equalizing mechanism is interposed between the welding gun and the robot. The equalizing mechanism compensates for a positional deviation of the welding target member and/or a teaching error of the robot.

### CITATION LIST

### PATENT DOCUMENTS

Patent Document 1: Japanese Unexamined Patent Publication No. S59-92181

### SUMMARY OF THE INVENTION

### TECHNICAL PROBLEM

Spot welding is one type of resistance welding. In resistance welding, a plurality of welding target members are welded through the following processes: (1) A first electrode and a second electrode sandwich a workpiece including the plurality of welding target members, and supply power to the workpiece while pressurizing the workpiece. (2) The welding target members are brought into contact with each other by the pressurization, and as a result, a power distribution path is formed at a joint interface in the workpiece, and Joule heat is generated at the joint interface. (3) The welding target members are molten at the joint interface in the workpiece. (4) The molten welding target members solidify to form a nugget, and the welding process is completed.

During the processes of resistance welding, electric discharge may occur between the electrodes and the welding target members. Such electric discharge wears the tip ends of the electrodes. Through repeated welding, the shape of the tip ends of the electrodes gradually changes due to wear, leading to a decline in welding quality. In the technical field of resistance welding, such a technical problem exists: a decline in welding quality caused by electric discharge.

The technique disclosed here reduces a decline in welding quality in resistance welding.

### SOLUTION TO THE PROBLEMS

The inventors of the present application have found that electric discharge occurs when welding target members are softened/molten in the process(es) (2) and/or (3) out of the processes (1) to (4) described above.

More specifically, during the welding process, the tip end surfaces of electrodes are pressed against a workpiece. The electrodes pressed against the workpiece are constrained by the workpiece and a welding gun. As the welding target members are softened/molten in the above process(es) (2) and/or (3), the constraint of the electrodes by the workpiece and the welding gun is loosened. As long as the center of a load applied to each electrode is on a central axis of the electrode, the tip end surface of the electrode does not move relative to the surface of the corresponding welding target member even if the constraint is loosened, and the electrode remains pressed against the workpiece in a direction of the central axis of the electrode ("central axis direction"). In resistance welding, the central axis of each electrode is generally orthogonal to the corresponding surface of the workpiece.

However, if the center of the load applied to the electrode is eccentric with respect to the central axis of the electrode or inclined with respect to the central axis, the tip end surface of the electrode slightly moves as the constraint of the electrode is loosened, in such a manner that the tip end surface slides along the surface of the welding target member. During this movement, misalignment occurs between the electrode and the welding target member, and electric discharge occurs between the electrode and the welding target member.

In the following description, the state in which the center of a load applied to an electrode is eccentric with respect to the central axis of the electrode or inclined with respect to the central axis is referred to as "the center of the load is offset from the central axis of the electrode."

In view of the above-described mechanism of occurrence of electric discharge, the inventors of the present application have focused on elastically bending the electrode with respect to the central axis. Assuming that the electrode can be bent, the elastic deformation of the electrode allows the entire tip end surface of the electrode to be uniformly in contact with the surface of the welding target member, even if the center of a load applied to the electrode is offset from the central axis of the electrode. The electrode can apply a load to the workpiece in the central axis direction. In this case, even if the welding target member is softened/molten and the constraint of the electrode by the workpiece and the welding gun is loosened, the tip end surface of the electrode does not move or hardly moves relative to the surface of the welding target member. The occurrence of misalignment between the electrode and the welding target member is reduced, and the occurrence of electric discharge between the electrode and the welding target member is reduced.

Specifically, the technique disclosed here is directed to a resistance welding device for welding a plurality of stacked welding target members of a workpiece by pressurizing the workpiece while supplying power to the workpiece. The resistance welding device includes
at least one electrode having a tip end surface configured to be in contact with the workpiece, the electrode being configured to pressurize the workpiece and supply power to the workpiece, and
the at least one electrode has, at an intermediate portion between the tip end surface and a base end of the electrode, at least one slit opening to an outer circumferential surface of the electrode and extending in a circumferential direction in a plane intersecting a central axis direction of the electrode.

In this configuration, the tip end surface of the electrode is in contact with the workpiece. The base end of the electrode may be supported by a welding gun, for example. The welding gun presses the tip end surface of the electrode against a surface of the welding target member. The electrode pressurizes the workpiece in the central axis direction of the electrode and supplies power to the workpiece.

When the welding target member is softened/molten due to the pressurization on and power supply to the workpiece, the constraint of the electrode pressed against the workpiece is loosened. If the center of a load applied to the electrode is offset from the central axis of the electrode, the tip end surface of the electrode may slightly move as the constraint of the electrode is loosened, causing misalignment between the tip end surface of the electrode and the surface of the welding target member.

The electrode has the slit at the intermediate portion of the electrode. The slit opens to the outer circumferential surface of the electrode and extends in the circumferential direction in a plane intersecting the central axis direction. Note that such a plane intersecting the central axis direction is a virtual plane in the electrode. The slit allows the intermediate portion of the electrode to elastically bend with respect to the central axis of the electrode in the case where the center of a load applied to the electrode is offset from the central axis of the electrode.

The elastic deformation of the intermediate portion of the electrode allows the entire tip end surface of the electrode to be uniformly in contact with the surface of the welding target member. The electrode applies a load to the workpiece through the tip end surface uniformly in contact with the surface of the welding target member. In this case, when the constraint of the electrode is loosened as the welding target member is softened/molten, the tip end surface of the electrode does not move or hardly moves relative to the surface of the welding target member. Even though the welding target member is deformed, a change in the positional relationship between the tip end surface of the electrode and the surface of the welding target member, which are in contact with each other, is minimized. The reduction of misalignment between the tip end surface of the electrode and the surface of the welding target member decreases the occurrence of electric discharge between the electrode and the welding target member, and this decreases wear on a tip end of the electrode. Because the wear is thus reduced, the shape of the tip end of the electrode does not change or is less likely to change even after repeated welding. The resistance welding device described above can maintain high welding quality. The resistance welding device described above is also advantageous in extending the life of the electrode.

In addition, the resistance welding device described above has an advantage that only the electrode has a new structure, and the parts thereof other than the electrode can be those of known resistance welding devices.

The at least one electrode includes a first electrode located on a first side of the workpiece and a second electrode located on a second side of the workpiece with the workpiece sandwiched by the first and second electrodes, and at least one of the first electrode or the second electrode has the at least one slit.

As long as at least one of the first electrode or the second electrode is elastically deformable, the resistance welding device can stabilize the welding quality. With the first electrode and the second electrode both elastically deformable, the resistance welding device can further stabilize the welding quality.

An opening of the at least one slit may extend, in the outer circumferential surface of the at least one electrode, in a circumferential direction relative to a direction orthogonal to the central axis direction.

The opening of the slit extending in the circumferential direction relative to a direction orthogonal to the central axis direction allows the intermediate portion of the electrode to stably bend with respect to the central axis, in regard to the entire circumference direction of the electrode.

The at least one slit of the at least one electrode may include a plurality of slits arranged in the central axis direction.

As the number of slits increases, the elastic modulus of the intermediate portion of the electrode decreases. Through the adjustment of the number of slits in the electrode, the elastic modulus of the intermediate portion of the electrode is set to an appropriate elastic modulus. With such an appropriate elastic modulus, it is possible to reduce the occurrence of misalignment between the tip end surface of the electrode and the surface of the welding target member during welding, while allowing pressurization on the workpiece through the electrode.

The at least one electrode may have, at a radially central portion thereof, a hole extending in the central axis direction,
the plurality of slits may communicate with the hole and include a first slit and a second slit, and
the at least one electrode may include:
   a base defined by the first slit and the second slit adjacent to each other in the central axis direction, the base being in an annular shape surrounding the hole and having a thickness that allows the base to elastically deform so as to flex in the central axis direction; and
   columns located in the first slit and the second slit, respectively, each column extending in the central axis direction to be connected to the base.

The columns in the slits and the base to which the columns are connected transmit a load in the central axis direction between the tip end surface of the electrode and the base end of the electrode. The columns in the slits provide rigidity that allows the electrode to pressurize the workpiece.

Receiving a load in the central axis direction through the column(s), the base tends to flex in the central axis direction. The slit adjacent to the base allows the base to flex in the central axis direction. The flection of base in the central axis direction compresses the slit in the central axis direction, and thus the intermediate portion of the electrode is compressible and deformable in the central axis direction.

A plurality of columns, each extending in the central axis direction to be connected to the base, may be located apart from each other in the circumferential direction in each of the first slit and the second slit.

As described above, the base flexes in the central axis direction upon receiving a load in the central axis direction through the columns. In a case where the center of a load applied to the electrode is offset from the central axis of the electrode, a load transmitted through one or some of the columns located apart from each other in the circumferential direction is relatively larger, and thus a portion of the base, to which the one or some of the columns are connected, flexes relatively greatly. As a result, the electrode bends with respect to the central axis. That is, the plurality of columns located apart from each other in the circumferential direction enable the electrode to bend stably with respect to the central axis.

The plurality of columns in the first slit may be offset from the plurality of columns in the second slit in the circumferential direction.

With the base interposed between the first slit and the second slit, the columns in the first slit are positionally offset from the columns in the second slit, and the base receives loads from the columns at different positions in the circumferential direction. This allows the base to efficiently flex in the central axis direction. As a result, the electrode can elastically bend with respect to the central axis. On the other hand, the electrode can transmit a load in the central axis direction through the columns positionally offset from one another, and this contributes to the rigidity required for load transmission. The electrode can reliably pressurize the workpiece.

The at least one electrode may be provided with, at a radially central portion thereof, a coolant path extending in the central axis direction of the electrode,
the at least one slit may communicate with the coolant path, and
the at least one electrode may include a reduction part configured to reduce coolant leakage through the at least one slit.

While the slit enables the elastic deformation of the electrode, the slit causes coolant leakage. The electrode has a reduction part. The reduction part reduces coolant leakage through the slit. The electrode is elastically deformable while having a cooling structure, and therefore, the resistance welding device can reduce a decline in welding quality.

The reduction part may be a cover that is attached to the outer circumferential surface of the at least one electrode and covers the opening of the at least one slit.

Because the cover covers the opening of the slit, the coolant having leaked through the opening of the slit remains between the electrode and the cover. Coolant leakage is thus reduced.

The at least one electrode may include: a cap tip configured to be in contact with the workpiece; a shank with a tip end, to which the cap tip is attached; and a holder that holds the shank, and
the shank or the holder may have the at least one slit.

The cap tip to be in contact with the workpiece is replaced as the cap tip wears. The replacement frequency of the cap tip is higher than that of the shank or that of the holder.

Forming the at least one slit at the cap tip increases the manufacturing cost of the cap tip. The increase in the manufacturing cost of the cap tip, which is more frequently replaced, increases the maintenance cost of the resistance welding device. In contrast, the shank or the holder is a suitable location for the at least one slit because their replacement frequencies are relatively low.

The workpiece may include: a first welding target member that is in a plate shape; and a second welding target member that is in a non-plate shape and is placed on the first welding target member,
the second welding target member may have a plurality of projections that are in contact with a surface of the first welding target member, and the first welding target member and the second welding target member may be welded to each other at locations of the plurality of projections,
a first electrode of the at least one electrode, configured to be in contact with the first welding target member, may have a guide pin configured to penetrate the first welding target member and the second welding target member in the central axis direction, and
a second electrode of the at least one electrode, configured to be in contact with the second welding target member, may have a recess, into which the guide pin is inserted, on a tip end surface of the second electrode.

The resistance welding device may perform projection welding. In projection welding, applying a load evenly to the plurality of protrusions of the second welding target member through the first electrode and the second electrode allows welding locations to be evenly welded, to improve welding quality.

As described above, the at least one electrode having the at least one slit is elastically deformable between the tip end surface and the base end of the electrode. The entire tip end surface of the electrode can be uniformly in contact with the surface of the welding target member, and this allows the electrode to apply a load in the central axis direction uniformly to the welding target member. That is, the resistance welding device can apply a load evenly to the plurality of projections of the second welding target member through the first electrode and the second electrode. The resistance welding device improves welding quality in projection welding.

Thus, the resistance welding device disclosed here can apply a load uniformly to the workpiece through the first electrode and the second electrode. With the use of this feature, a workpiece to be welded using the resistance welding device may be, for example, a workpiece including tubular welding target members, which are butted against each other in an axial direction of the members. The resistance welding device described above can apply a load uniformly to the entire circumference of a joint portion of the welding target members through the first electrode and the second electrode. The resistance welding device can improve welding quality.

The resistance welding device disclosed here can be used for ring mash welding. In ring mash welding, a first welding target member with a hole and a second welding target member with an outer shape slightly larger than the hole are welded together around the hole along its circumference. The resistance welding device described above can apply a load uniformly to the welding location around the hole. The resistance welding device improves welding quality in ring mash welding.

### ADVANTAGES OF THE INVENTION

The resistance welding device described above can reduce the occurrence of misalignment between the tip end surface of the at least one electrode and the surface of the welding target member during resistance welding. Furthermore, the resistance welding device can apply a load uniformly to the workpiece. The resistance welding device can reduce a decline in welding quality.

### BRIEF DESCRIPTION OF DRAWINGS

FIG. 1 illustrates a spot welding device.
FIG. 2 illustrates a first electrode of the spot welding device.
FIG. 3 illustrates a shank of the first electrode.
FIG. 4 includes a top view of the shank in an upper part of FIG. 4, and a sectional view of the shank taken along A-A in a lower part of FIG. 4.
FIG. 5 illustrates a procedure for forming a slit.
FIG. 6 illustrates a state in which the shank is elastically deformed in an upper part of FIG. 6, and includes a sectional view of the shank taken along B-B in a lower part of FIG. 6.
FIG. 7 illustrates a state in which the shank is bent.
FIG. 8 illustrates a modification of electrodes with respect to slits.
FIG. 9 illustrates a modification of the electrodes with respect to columns.
FIG. 10 illustrates a welding process using a projection welding device.
FIG. 11 is an exploded view of a first electrode of the projection welding device.
FIG. 12 illustrates a second electrode of the projection welding device.

### DESCRIPTION OF EMBODIMENTS

The following will describe embodiments of a resistance welding device with reference to the drawings. The resistance welding device described here is an example.

### (Overall Structure of Spot Welding Device)

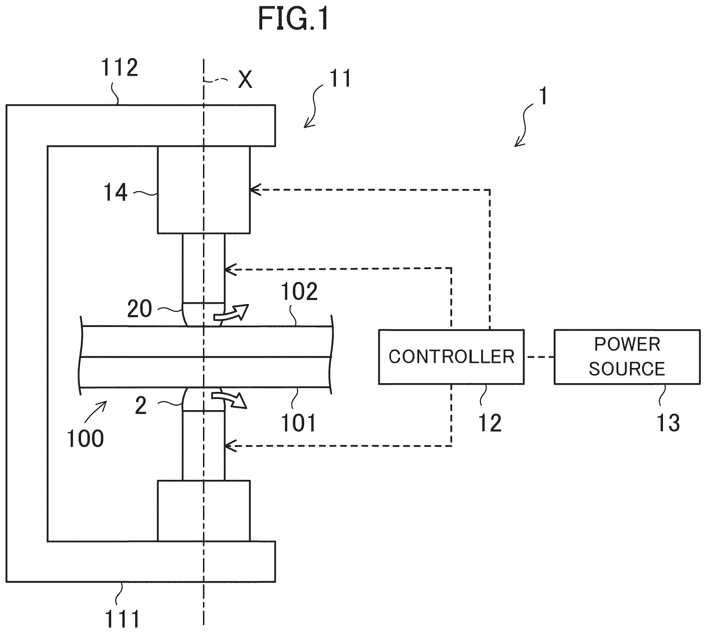

FIG. 1 illustrates, as an example, the entirety of the resistance welding device. The resistance welding device pressurizes a workpiece 100 including a plurality of stacked welding target members 101 and 102, and supplies power to the workpiece 100, thereby welding the welding target members 101 and 102 together. The resistance welding device in FIG. 1 is a so-called spot welding device 1. In FIG. 1, a pressurizing direction, in which the spot welding device 1 pressurizes the workpiece 100, is an up-down direction on the drawing sheet. The pressurizing direction is not limited to the up-down direction.

The spot welding device 1 welds welding target members 101 and 102 together, both of which are in a plate shape. The two welding target members 101 and 102 are metal plates. Both the two welding target members 101 and 102 may be iron-based members. Each iron-based member is, for example, a steel member with high strength and rigidity, such as high-tensile steel. Alternatively, one of the two welding target members 101 and 102 may be an iron-based member and the other may be an aluminum-based member, for example. The aluminum-based member is, for example, an aluminum alloy member. In the example of FIG. 1, the workpiece 100 includes the two welding target members 101 and 102, however, the workpiece 100 may include three or more welding target members. Furthermore, while the two welding target members 101 and 102 have the same thickness in FIG. 1, the welding target members 101 and 102 may have different thicknesses.

The spot welding device 1 illustrated in FIG. 1 as an example includes a welding gun 11. The welding gun 11 is supported by, for example, a robot (not illustrated). The robot positions the welding gun 11 at a location where welding for the workpiece 100 is performed.

The welding gun 11 supports a first electrode 2 and a second electrode 20. The welding gun 11 has a first arm 111 supported in a cantilevered manner, in which a proximal end of the arm is fixed while a distal end of the arm is not fixed. The first arm 111 supports the first electrode 2 at its free end. A second arm 112 is also supported in the cantilevered manner. The second arm 112 supports the second electrode 20 at its free end.

The first electrode 2 is located on a first side of the workpiece 100. In FIG. 1, the first electrode 2 is located on a lower side of the workpiece 100. The second electrode 20 is located on a second side of the workpiece 100. In FIG. 1, the second electrode 20 is located on an upper side of the workpiece 100. The first electrode 2 and the second electrode 20 sandwich the workpiece 100 in a stacking direction, in which the welding target members 101 and 102 are stacked, and pressurize the workpiece 100 in the stacking direction.

The first electrode 2 is substantially columnar. The second electrode 20 is also substantially columnar. The first electrode 2 and the second electrode 20 are opposed to each other in the direction of central axes X of the electrodes ("central axis X direction").

The welding gun 11 has a pressurizing device 14. The pressurizing device 14 moves the second electrode 20 in the central axis X direction relative to the workpiece 100. The pressurizing device 14 includes, for example, an air cylinder, a hydraulic cylinder, or a servo motor. The welding gun 11 moves the second electrode 20 through the pressurizing device 14 while a tip end of the first electrode 2 is in contact with a surface of the workpiece 100. This allows the first electrode 2 and the second electrode 20 to sandwich the workpiece 100 in the central axis X direction and to pressurize the workpiece 100 in the central axis X direction.

The spot welding device 1 includes a controller 12. The controller 12 controls pressurization on and power supply to the workpiece 100 in the spot welding device 1. The controller 12 is a controller based on a well-known microcomputer, and includes a central processing unit (CPU), a memory, and an input/output bus. The CPU is a central processing unit that executes a computer program. The computer program includes a basic control program such as an operating system (OS) and an application program activated on the OS to implement a specific function. The memory includes a random access memory (RAM) and a read only memory (ROM). The ROM stores, e.g., various computer programs and data. The RAM is a memory in which a processing area used when the CPU performs a series of processing is provided. The input/output bus inputs and outputs an electric signal to and from the controller 12.

The controller 12 outputs a control signal to the pressurizing device 14 in accordance with a control program stored in the ROM. The workpiece 100 is pressurized by the first electrode 2 and the second electrode 20. The controller 12 also supplies current for welding from a power source 13 to the workpiece 100 through the first electrode 2 and the second electrode 20.

Now, a welding process using the spot welding device 1 is briefly described.
(1) The first electrode 2 and the second electrode 20, sandwiching the workpiece 100 in the central axis X direction, supply power to the workpiece 100 while pressurizing the workpiece 100.
(2) The welding target members 101 and 102 are brought into contact with each other by the pressurization, and due to this, a power distribution path is formed at a joint interface in the workpiece 100, and Joule heat is generated at the joint interface in the workpiece 100.
(3) The welding target members 101 and 102 are molten at the joint interface in the workpiece 100.
(4) The molten welding target members 101 and 102 solidify to form a nugget, and the welding process is completed.

### (Structure of Electrodes)

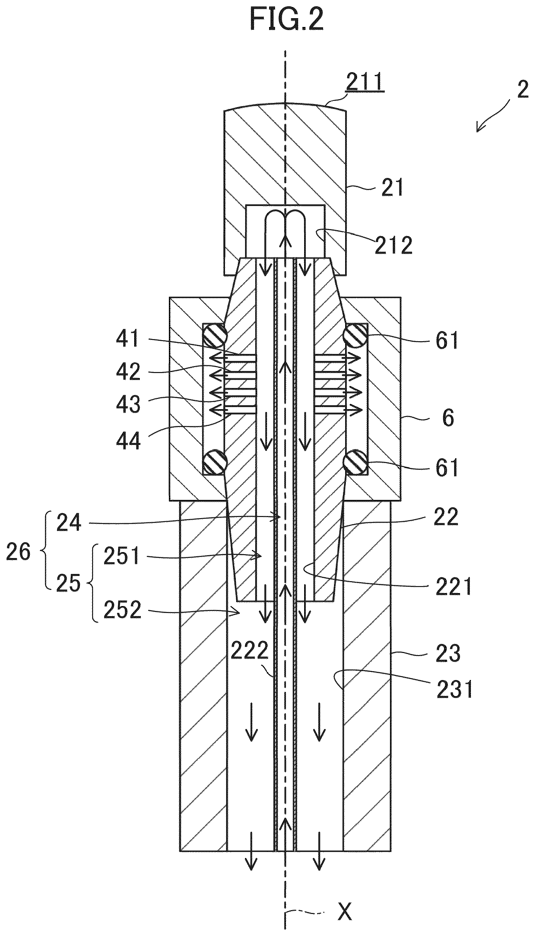

FIG. 2 illustrates, as an example, a structure of the first electrode 2. The first electrode 2 and the second electrode 20 have the same structure except that the upper and lower sides are reversed. The description of the structure of the second electrode 20 is omitted.

The first electrode 2 has a cap tip 21 located at a tip end of the first electrode 2. The cap tip 21 has a tip end surface 211 to be in contact with the workpiece 100. The cap tip 21 is replaced if the tip end surface 211 becomes worn due to repeated welding performed by the spot welding device 1.

The cap tip 21 has a recess 212. The recess 212 opens to a base end surface of the cap tip 21 and is recessed from the base end surface along the central axis X of the first electrode 2. The recess 212 forms part of a coolant path 26, as described later.

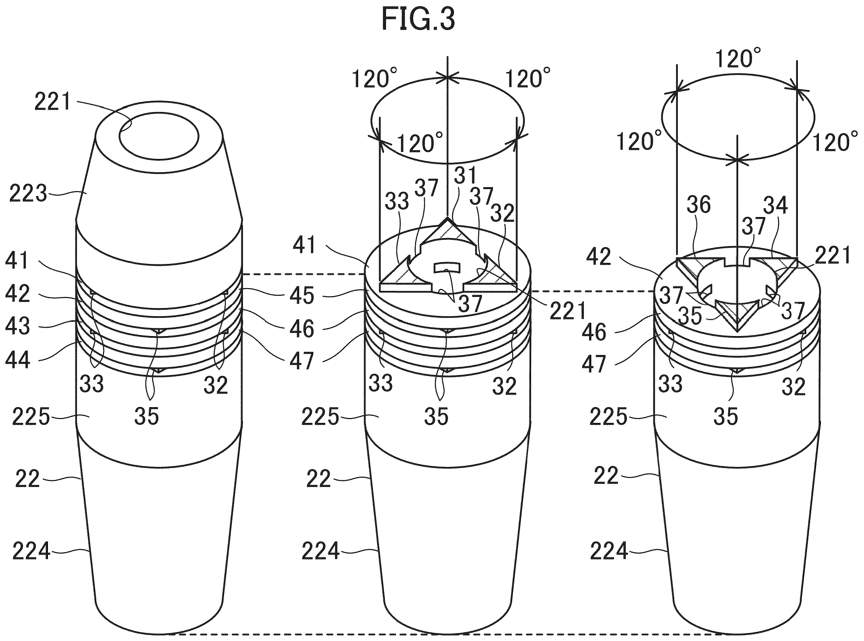

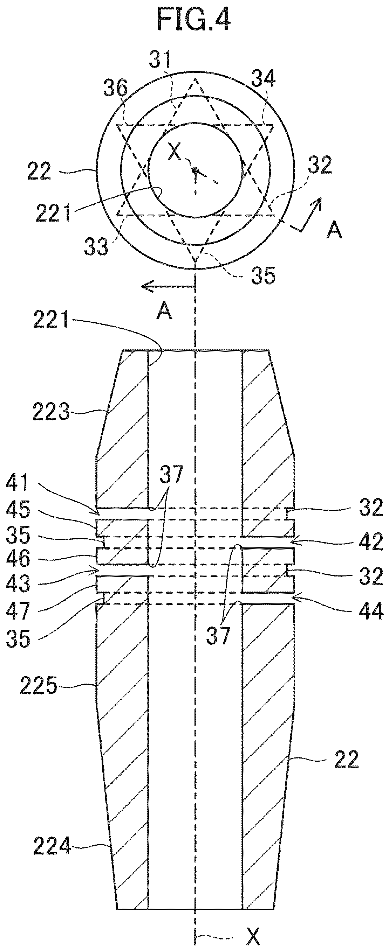

A shank 22 extends along the central axis X of the first electrode 2. The cap tip 21 is attached to a tip end of the shank 22. The shank 22 supports the cap tip 21. The shank 22 has a first hole 221. The first hole 221 extends along the central axis X of the first electrode 2. The first hole 221 opens at a tip end and a base end of the shank 22. The first hole 221 passes through the shank 22. The shank 22 has a tubular shape (see also FIGS. 3 and 4).

With the cap tip 21 attached to the tip end of the shank 22, the first hole 221 is connected to the recess 212 of the cap tip 21. As described later, the first hole 221 forms part of the coolant path 26.

An inner tube 222 is disposed in the first hole 221. The inner tube 222 extends along the central axis X of the first electrode 2. The inner tube 222 protrudes from the base end of the shank 22. The inner tube 222 is also inserted into a second hole 231 of a holder 23, which will be described later.

The shank 22 also has slits 41 to 44. The first electrode 2, illustrated in FIG. 2 as an example, has the plurality of slits 41 to 44. Details of the shape of the slits 41 to 44 will be described later.

The holder 23 is a tubular member extending along the central axis X of the first electrode 2. The holder 23 has the second hole 231. The second hole 231 extends along the central axis X of the first electrode 2. The second hole 231 passes through the holder 23.

A base end portion of the shank 22 is inserted into the second hole 231 through a tip end of the holder 23. The holder 23 supports the shank 22. The second hole 231 of the holder 23 and the first hole 221 of the shank 22 communicate with each other.

As described above, the inner tube 222 extends through the shank 22 and the holder 23. The inner tube 222 forms a feed path 24 for supplying coolant to the cap tip 21. A tip end of the inner tube 222 is connected to the recess 212 of the cap tip 21. The coolant is supplied into the recess 212 through the inner tube 222. The coolant effectively cools the cap tip 21 (see arrows in FIG. 2).

A space that is inside the first hole 221 of the shank 22 and outside the inner tube 222 forms part of a return path 25 for the coolant. A space that is inside the second hole 231 of the holder 23 and outside the inner tube 222 also forms part of the return path 25 for the coolant. A return path 251 and a return path 252 communicate with each other. The coolant supplied into the recess 212 of the cap tip 21 is reversed inside the recess 212 and returns to a base end of the holder 23 through the return paths 251 and 252. The coolant path 26 having a double structure including the feed path 24 and the return path 25 can efficiently cool the cap tip 21.

### (Structure of Slits)

FIG. 3 includes, in a left part thereof, a perspective view of the shank 22. FIG. 3 includes, in a middle part thereof, a perspective view of the shank 22 with its cross-section cut at the position of a first slit 41. FIG. 3 includes, in a right part thereof, a perspective view of the shank 22 with its cross-section cut at the position of a second slit 42.

As described above, the shank 22 has the plurality of slits 41 to 44. More specifically, the shank 22 includes an upper tapered portion 223, a lower tapered portion 224, and an intermediate portion 225. The upper tapered portion 223 tapers narrower upward. The cap tip 21 is attached to a tip end of the upper tapered portion 223. The lower tapered portion 224 tapers narrower downward. A base end of the lower tapered portion 224 is supported by the holder 23. The intermediate portion 225 is located between the upper tapered portion 223 and the lower tapered portion 224. The intermediate portion 225 has a constant outer diameter.

The intermediate portion 225 has the slits 41 to 44. The slits 41 to 44 are arranged in the central axis X direction of the first electrode 2. The shank 22 in the illustrated example has the first slit 41, the second slit 42, a third slit 43, and a fourth slit 44, in this order from the tip end to the base end of the shank 22.

Each of the slits 41 to 44 extends in a circumferential direction in a plane intersecting the central axis X direction, more precisely, in a plane orthogonal to the central axis X direction. Such a plane orthogonal to the central axis X direction is a virtual plane in the first electrode 2. Each of the slits 41 to 44 opens to an outer circumferential surface of the shank 22. The opening of each of the slits 41 to 44 extends, in the outer circumferential surface of the shank 22, in a circumferential direction relative to a direction orthogonal to the central axis X direction. As shown in FIGS. 3 and 4, each of the slits 41 to 44 communicates with the first hole 221 of the shank 22.

The slits 41 to 44 of the shank 22 shown in FIGS. 3 and 4 have the same width in the central axis X direction. The intervals between the slits 41 to 44 adjacent to each other in the central axis X direction are also the same.

A first base 45 is defined by the first slit 41 and the second slit 42 adjacent to each other in the central axis X direction. Similarly, a second base 46 is defined by the second slit 42 and the third slit 43, and a third base 47 is defined by the third slit 43 and the fourth slit 44. All of the bases 45 to 47 have an annular shape surrounding the first hole 221. Furthermore, because the intervals between the slits 41 to 44 adjacent to each other in the central axis X direction are the same, the thicknesses of the bases 45 to 47 in the central axis X direction are the same.

There are columns 31 to 33 and 34 to 36 in the slits 41 to 44. Each of the columns 31 to 36 extends in the central axis X direction in a corresponding one of the slits 41 to 44 and is connected to any of the bases 45 to 47. Because there is no base above the first slit 41, upper ends of the columns 31 to 33 in the first slit 41 are connected to an upper wall defining the first slit 41. Similarly, because there is no base below the fourth slit 44, lower ends of the columns 34 to 36 in the fourth slit 44 are connected to a lower wall defining the fourth slit 44.

In each of the slits 41 to 44, there are three columns out of the columns 31 to 36. More specifically, a first column 31, a second column 32, and a third column 33 are in the first slit 41. Another first column 31, second column 32, and third column 33 are in the third slit 43.

A fourth column 34, a fifth column 35, and a sixth column 36 are in the second slit 42. Another fourth column 34, fifth column 35, and sixth column 36 are in the fourth slit 44.

As shown in an upper part of FIG. 4, all the first to sixth columns 31 to 36 have the same shape with a substantially triangular cross-section. The first to third columns 31 to 33 are disposed around the first hole 221 so as to surround the first hole 221. The apexes of the triangles of the columns 31 to 33 are located on an outer side in a radial direction of the first electrode 2. In the shank 22 of the illustrated example, the first to third columns 31 to 33 are arranged at intervals of 120 degrees. In each slit 41, 43, there is a communication port 37 between the first column 31 and the second column 32. The communication port 37 connects the slit 41, 43 to the first hole 221. Similarly, communication ports 37 connecting the slit 41, 43 to the first hole 221 are between the second column 32 and the third column 33 and between the third column 33 and the first column 31, respectively.

The fourth to sixth columns 34 to 36 are also disposed around the first hole 221 so as to surround the first hole 221. The apexes of the triangles of the columns 34 to 36 are located on the outer side in the radial direction of the first electrode 2. In the shank 22 of the illustrated example, the fourth to sixth columns 34 to 36 are arranged at intervals of 120 degrees. In each slit 42, 44, there are communication ports 37, connecting each slit 42, 44 to the first hole 221, between the fourth column 34 and the fifth column 35, between the fifth column 35 and the sixth column 36, and between the sixth column 36 and the fourth column 34.

Each first column 31 and the corresponding fourth column 34 are angularly offset from each other by 60 degrees in the circumferential direction. Similarly, each second column 32 and the corresponding fifth column 35 are angularly offset from each other by 60 degrees in the circumferential direction, and each third column 33 and the corresponding sixth column 36 are angularly offset from each other by 60 degrees in the circumferential direction. Thus, as shown in the upper part of FIG. 4, all the columns 31 to 36 in two adjacent slits (41 to 44) sandwiching one of the bases 45 to 47 are positionally offset from one another in the circumferential direction.

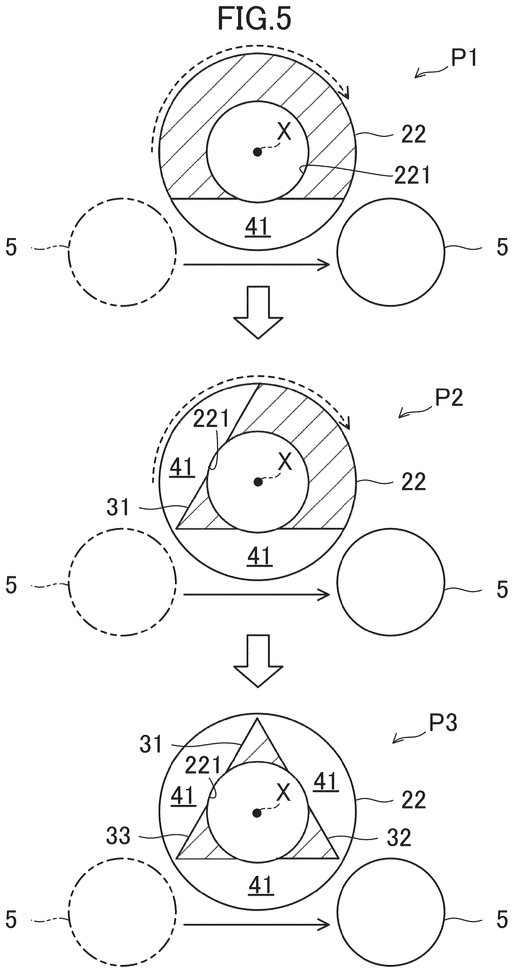

The creation of the slits and the columns with respect to the shank 22 can be performed, for example, as follows. FIG. 5 shows a procedure for forming the first slit 41 and the first to third columns 31 to 33 with respect to the shank 22.

First, the shank 22 having the first hole 221 is prepared. In step P1, the shank 22 is fixed, and a cutting tool 5 is moved relative to an outer peripheral portion of the shank 22 in a direction orthogonal to the central axis X. With this, an arcuate portion surrounded by an arc and a chord in a cross-section of the shank 22 is cut away by the cutting tool 5. The cutting tool 5 is moved inward in a radial direction of the shank 22 to a position where the chord interferes with the first hole 221 of the shank 22. In the step P1, a part of the slit 41, which opens to the outer circumferential surface of the shank 22 and communicates with the first hole 221, is formed at the shank 22.

Subsequently, in step P2, the shank 22 is rotated 120 degrees about its central axis and the shank 22 is fixed. As in the step P1, the cutting tool 5 is moved relative to the outer peripheral portion of the shank 22 in the direction orthogonal to the central axis X. With this, as in the step P1, an arcuate portion surrounded by an arc and a chord in the cross-section of the shank 22 is cut away by the cutting tool 5. A part of the slit 41 is formed, which opens at a position different from the above position on the outer circumferential surface of the shank 22 and communicates with the first hole 221. The first column 31 is also formed in the step P2.

Subsequently, in step P3, the shank 22 is further rotated 120 degrees about the central axis and the shank 22 is fixed. Then, as in the step P1, the cutting tool 5 is moved relative to the outer peripheral portion of the shank 22 in the direction orthogonal to the central axis X. With this, as in the step P1, an arcuate portion surrounded by an arc and a chord in the cross-section of the shank 22 is cut away by the cutting tool 5. A part of the slit 41 is formed, which opens at a position different from the above positions on the outer circumferential surface of the shank 22 and communicates with the first hole 221. In the step P3, the second column 32 and the third column 33 are also formed. The parts of the slit 41 are individually formed in the three steps, respectively, at the shank 22 of the illustrated example. These parts of the slit 41 are connected to each other near the radially outer end portions of the first column 31, the second column 32, and the third column 33.

After the first slit 41 and the first to third columns 31 to 33 are formed in the shank 22 through the steps P1 to P3, the relative position between the shank 22 and the cutting tool 5 in the central axis X direction is changed, and then the second slit 42 and the fourth to sixth columns 34 to 36 are formed at the shank 22 through the steps P1 to P3 described above. Through the adjustment of the orientation of the shank 22 in the circumferential direction, the positions of the fourth to sixth columns 34 to 36 are offset by 60 degrees from the positions of the first to third columns 31 to 33, respectively. The creation of the third slit 43 and the first to third columns 31 to 33 and the creation of the fourth slit 44 and the fourth to sixth columns 34 to 36 with respect to the shank 22 can also be performed in a similar manner.

### (Elastic Deformation of Electrodes)

As described above, the first electrode 2 has the slits 41 to 44 and the columns 31 to 36. The second electrode 20 also has slits and columns. The slits 41 to 44 and the columns 31 to 36 allow the first electrode 2 to elastically deform at the intermediate portion between the tip end surface 211 and a base end of the first electrode 2.

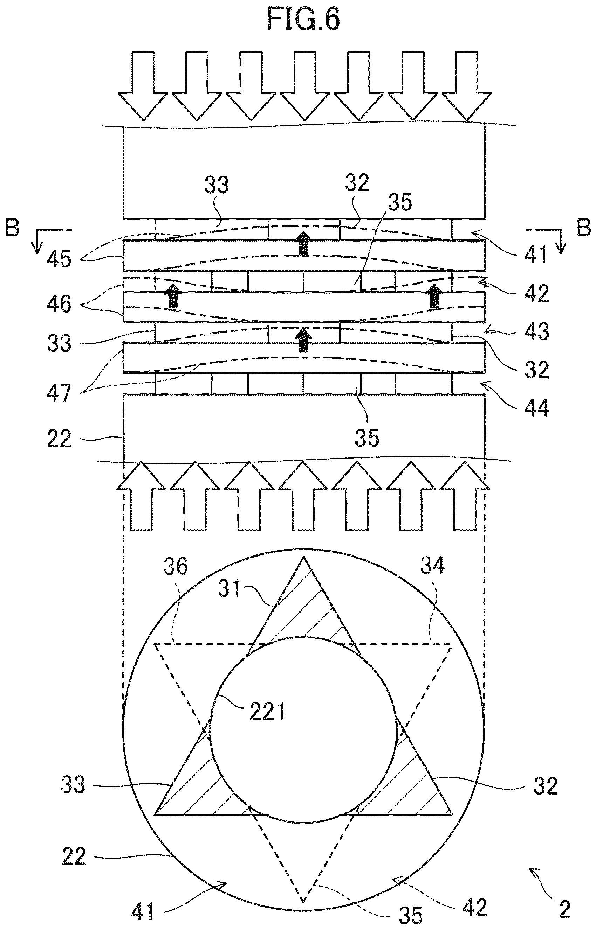

FIG. 6 illustrates, as an example, a state in which a load in the central axis X direction is applied to the first electrode 2 uniformly in a plane orthogonal to the central axis X direction. This is equivalent to that the center of the load applied to the first electrode 2 is on the central axis X. At the shank 22, the load is transmitted in the central axis X direction via the columns 31 to 36 and the bases 45 to 47.

As shown in a lower part of FIG. 6, the first to third columns 31 to 33 in the first slit 41 are arranged at equal intervals in the circumferential direction. The fourth to sixth columns 34 to 36 in the second slit 42, which is adjacent to the first slit 41 with the first base 45 interposed therebetween, are offset from the first to third columns 31 to 33 in the circumferential direction. Thus, the positions of the first to third columns 31 to 33 above the first base 45 are offset from the positions of the fourth to sixth columns 34 to 36 below the first base 45. Due to this, positions at which the load in the central axis X direction is applied to the first base 45 extending in the direction orthogonal to the central axis X direction are offset in the circumferential direction as indicated, as an example, with black arrows in an upper part of FIG. 6. As a result, the first base 45 flexes in the central axis direction as illustrated, as an example, with two-dot-dash lines in the upper part of FIG. 6. In other words, the thickness of the first base 45 in the central axis direction is a thickness that allows the first base 45 to flex when a load is applied.

Similarly, because the fourth to sixth columns 34 to 36 in the second slit 42 are offset from the first to third columns 31 to 33 in the third slit 43 in the circumferential direction, the second base 46 flexes in the central axis X direction as illustrated, as an example, with two-dot-dash lines in the upper part of FIG. 6.

Furthermore, because the first to third columns 31 to 33 in the third slit 43 are offset from the fourth to sixth columns 34 to 36 in the fourth slit 44 in the circumferential direction, the third base 47 also flexes in the central axis X direction as illustrated, as an example, with two-dot-dash lines in the upper part of FIG. 6. It should be noted that FIG. 6 illustrates the flection of the bases 45 to 47 exaggeratedly.

The columns 31 to 36 promote the flection of the bases 45 to 47, and the slits 41 to 44 allow for the flexing of the bases 45 to 47. When the center of a load applied to the first electrode 2 is on the central axis X, the shank 22 elastically deforms so as to contract in the central axis X direction. That is, the shank 22 is elastically compressible and deformable while transmitting the load in the central axis X direction.

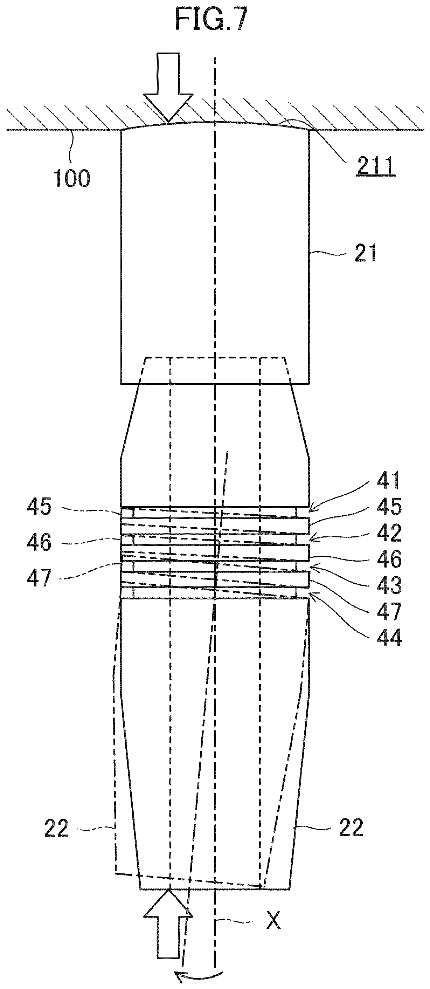

If the center of a load applied to the first electrode 2 is eccentric with respect to the central axis X of the first electrode 2 or inclined with respect to the central axis X, the load is applied non-uniformly in a plane orthogonal to the central axis X direction. In this case, the load is applied non-uniformly to each of the bases 45 to 47 through the corresponding three columns (31 to 36) in the corresponding one of the slits 41 to 44. Thus, a portion of each of the bases 45 to 47, to which a relatively large load is applied through the columns (31 to 36), locally flexes significantly in the central axis X direction. For example, FIG. 7 shows an example in which a compressive load is applied to the first electrode 2 along an axis eccentric to the left on the drawing sheet with respect to the central axis X, as indicated with a white arrow. In this case, left portions of the slits 41 to 44 (the left on the drawing sheet) are relatively compressed, and therefore the shank 22 is bent such that the central axis X is inclined (see an arrow in FIG. 7). The thus bent shank 22 keeps the tip end surface 211 of the cap tip 21 in contact with the surface of the workpiece 100. It should be noted that FIG. 7 illustrates the bent shank 22 exaggeratedly.

When the welding target members 101 and 102 are softened/molten in the above-described welding process(es) (2) and/or (3), the electrodes, constrained by the welding gun 11 and the workpiece 100, tend to move as the constraint is loosened. More specifically, as shown in FIG. 1, the first electrode 2 and the second electrode 20 are respectively held by the first arm 111 and the second arm 112, which are supported in a cantilevered manner. Due to this, when the welding target members 101 and 102 are softened/molten, the first electrode 2 and the second electrode 20 tend to move so as to incline in the directions indicated with white arrows in FIG. 1.

At this time, in each electrode 2, 20 having the slits 41 to 44 and the columns 31 to 36, the shank 22 is bent as described above, and this allows the tip end surface 211 of the cap tip 21 to be kept in contact with the corresponding surface of the workpiece 100. This consequently prevents misalignment between the tip end surface 211 of each electrode 2, 20 and the surface of the corresponding welding target member 101, 102, and thus reduces the occurrence of electric discharge between the electrode 2, 20 and the welding target member 101, 102. The reduction of electric discharge decreases wear on the tip end of the electrode 2, 20, and therefore, the spot welding device 1 can reduce a decline in welding quality even after repeated welding. Furthermore, the decrease of wear on the cap tip 21 prolongs the life of the cap tip 21.

In addition, the spot welding device 1 described above has an advantage that only the electrodes 2 and 20 have the new structure, and the parts of the device other than the electrodes 2 and 20 can be those of known spot welding devices.

### (Modifications of Slits and Columns)

The opening of each of the slits 41 to 44 extends, in an outer circumferential surface of each electrode 2, 20, in the circumferential direction relative to a direction orthogonal to the central axis X direction. This configuration has an advantage that it is possible to elastically deform the electrode 2, 20 stably in a bending direction in regard to the entire circumferential direction of the electrode 2, 20, in a case where the center of a load applied to the electrode 2, 20 is offset from the central axis X of the electrode 2, 20. The opening of each slit may extend, in the outer circumferential surface of each electrode, in a circumferential direction in a plane intersecting the central axis X direction. The electrode with this structure can also be elastically deformed in the bending direction in a case where the center of a load applied to the electrode is offset from the central axis of the electrode.

The elastic modulus of each electrode 2, 20 can be changed by changing the position or number of slits and/or the position or number of columns in the electrode 2, 20. Properly setting the elastic modulus of each electrode 2, 20 according to the welding conditions of the spot welding device 1 makes it possible to reduce the occurrence of misalignment between the tip end surface 211 of each electrode 2, 20 and the workpiece 100 while enabling the pressurization onto the workpiece 100 through the electrode 2, 20.

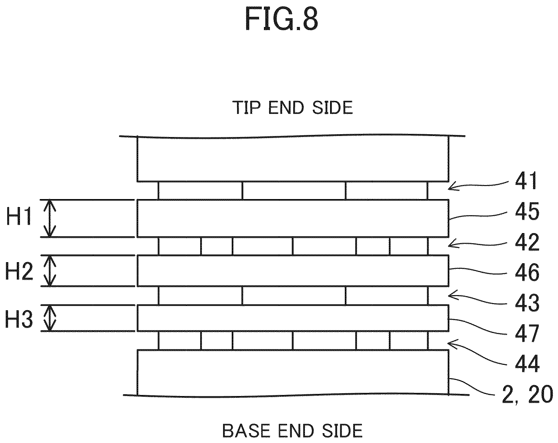

The bases included in each electrode may have the same thickness or thicknesses different from each other. In FIG. 8, the first base 45 located on a tip end side of the electrode 2, 20 has a relatively thicker thickness H1, while the third base 47 located on a base end side of the electrode 2, 20 has a relatively thinner thickness H3. The thicker base has a higher bending rigidity. That is, the thicker base is less likely to flex in the central axis X direction. The thinner base has a lower bending rigidity. The thinner base is more likely to flex in the central axis X direction. Designing the first base 45 located on the tip end side of the electrode 2, 20 to have a relatively thicker thickness and the third base 47 located on the base end side of the electrode 2, 20 to have a relatively thinner thickness allows the electrode 2, 20 to elastically deform stably. Thus, it is possible to reduce the occurrence of misalignment between the tip end surface 211 of the electrode 2, 20 and the corresponding surface of the workpiece 100 more effectively.

In FIG. 8, the thickness H1 of the first base 45, the thickness H2 of the second base 46, and the thickness H3 of the third base 47 decrease in this order (H1 > H2 > H3). The size relationship of the thicknesses of the bases is not limited to the example shown in the figure. For example, the size relationship of the thicknesses of the bases may be H1 = H2 > H3 or H1 > H2 = H3.

The number of bases is not limited to three. At least one base is required for the electrode 2, 20, and accordingly, at least two slits are required for the electrode 2, 20. The number of slits that can be included in the electrode 2, 20 depends on the length of the electrode 2, 20 in the central axis X direction. The electrode 2, 20 may have up to five slits, for example.

In the example illustrated in FIG. 6, the columns 31 to 36 in each set included in the electrode 2, 20 are all offset from one another in the circumferential direction. This arrangement allows the electrode 2, 20 to elastically deform stably in the bending direction while keeping the rigidity in the central axis X direction required for the electrode 2, 20.

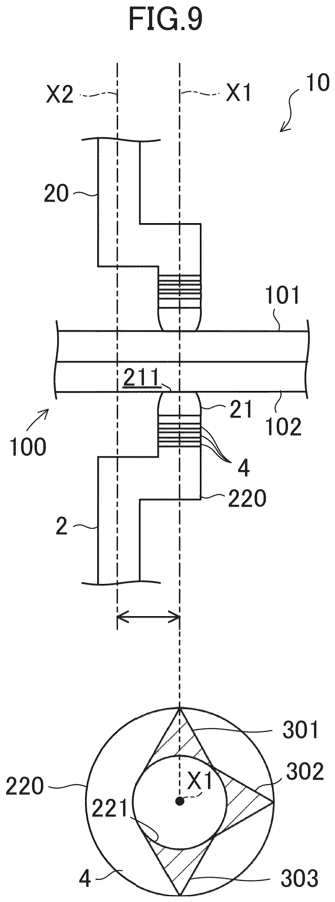

FIG. 9 illustrates, as an example, the electrodes 2 and 20 in each of which the arrangement of columns is modified. A spot welding device 10 shown in an upper part of FIG. 9 has shanks 220 each having a bent intermediate portion. The shanks 220 in such a shape can avoid interference with the workpiece 100. **In** FIG. 9, a base end of each shank 220 held by a not-shown holder and a tip end of the shank 220 supporting its cap tip 21 are offset from each other in a horizontal direction (see X1 and X2 in FIG. 9). **In** a state where the first electrode 2 and the second electrode 20 pressurize the workpiece 100, an eccentric load is constantly applied to each cap tip 21 and shank 220.

Each shank 220 has slits 4. For such an electrode structure, in which an eccentric load is applied to the cap tip 21, it is preferable to design the shank 220 so that a portion thereof to the right of the axis X1 on the drawing sheet of FIG. 9 has a higher rigidity and a portion thereof to the left of the axis X1 on the drawing sheet has a lower rigidity, in order to uniformly bring the entire tip end surface 211 of the cap tip 21 into contact with a surface of the workpiece 100.

As shown in a lower part of FIG. 9, three columns 301, 302, and 303 in each slit 4 are located densely on one side with respect to the axis X1 in the slit 4. The angle between the column 301 and the column 302 is 90 degrees, and the angle between the column 302 and the column 303 is also 90 degrees. This arrangement allows the right portion of the shank 220, which is to the right on the drawing sheet of FIG. 9, to have a higher rigidity, while the left portion thereof, which is to the left on the drawing sheet, to have a lower rigidity. The cap tip 21 can stably pressurize the workpiece 100, and it is possible to reduce the occurrence of misalignment between the tip end surface 211 of the cap tip 21 and the corresponding surface of the workpiece 100.

In each shank 220 shown in FIG. 9, the three columns 301, 302, and 303 in one slit 4 may be respectively offset in the circumferential direction from the columns in an adjacent slit 4, which is adjacent to the one slit 4 in the direction of the axis X1.

The number of columns 31 to 36, 310 to 330 provided in one slit 41 to 44, 4 is not limited to three. However, when the number of columns 31 to 36, 310 to 330 is three, these three columns 31 to 36, 310 to 330 define a unique plane in which the three columns are connected to one another. Having three columns 31 to 36, 310 to 330 per slit 41 to 44, 4 provides an advantage that the electrode 2, 20, having a plurality of slits 41 to 44, 4 stacked in the axial direction of the electrode, can be bent stably.

Referring to the shank 22 shown in FIG. 3 as an example, the radially outermost ends of the columns 31 to 36 (i.e., portions corresponding to the apexes of the substantially triangular columns 31 to 36 in plan view) are located radially inward of the outer circumferential surface of the shank 22. The radially outermost ends of the columns 31 to 36 may be at the same position as the outer circumferential surface of the shank 22. The columns 31 to 36 may consequently divide each of the slits 41 to 44 into a plurality of slits in the circumferential direction.

The cross-sectional shape of each column is not limited to a substantially triangular shape. Each column may have any shape.

The location of the slits 41 to 44, 4 is not limited to the shank 22, 220. The holder may have the slits 41 to 44, 4, for example. Alternatively, the cap tip 21 may have the slits 41 to 44, 4. However, forming the slits 41 to 44, 4 at the cap tip 21 increases the manufacturing cost of the cap tip 21. The increase in the manufacturing cost of the cap tip 21, which is frequently replaced, increases the maintenance cost of the spot welding device 1, 10. The shank 22, 220 or the holder 23 is a suitable location for the slits 41 to 44, 4 because their replacement frequencies are relatively low.

Furthermore, both the first electrode 2 and the second electrode 20 of the spot welding device 1, 10 do not have to include the slits 41 to 44, 4 and the columns 31 to 36, 310 to 330. Either one of the first electrode 2 or the second electrode 20 may include the slits 41 to 44, 4 and the columns 31 to 36, 310 to 330.

### (Structure for Reducing Coolant Leakage)

Each of the slits 41 to 44 of the shank 22 communicates with the first hole 221 forming the coolant path 26 via the communication ports 37. Due to this, coolant flowing through the return path 25 of the coolant path 26 leaks to the outside of the electrode 2, 20 through the communication ports 37 and the slits 41 to 44.

Each electrode 2, 20 is provided with a reduction part that reduces coolant leakage. The reduction part is, for example, a cover 6 attached to the shank 22, as shown in FIG. 2.

The cover 6 covers the openings of the first to fourth slits 41 to 44 that open to the outer circumferential surface of the shank 22. As indicated with arrows in FIG. 2, coolant that has leaked out of the electrode 2 through the openings of the first to fourth slits 41 to 44 remains inside the cover 6.

O-rings 61 are interposed between the shank 22 and the cover 6. The O-rings 61 are attached to an upper portion and a lower portion of the shank 22, respectively. The O-rings 61 reduce coolant leakage through a gap between the shank 22 and the cover 6.

Thus, in each electrode 2, 20 having a cooling structure, the elastic deformation by virtue of the slits 41 to 44 and the reduction of coolant leakage are both achieved.

The reduction part is required to be attached only to the electrode 2, 20 having the slits 41 to 44, 4. This is because coolant leakage does not occur without the slits 41 to 44, 4.

### (Structure of Projection Welding Device)

The application of the technique disclosed here is not limited to the spot welding device 1. The electrode disclosed here has a function of elastic deformation. Therefore, in addition to the advantageous effect of reducing the occurrence of misalignment between the tip end surface 211 of the electrode and the surface of the workpiece 100, it is also possible to achieve an advantageous effect that the tip end surface 211 of the electrode can apply a load uniformly to the workpiece 100. This advantageous effect is useful for projection welding devices, for which evenly welding a plurality of projections of a welding target member is required. Projection welding is one type of resistance welding.

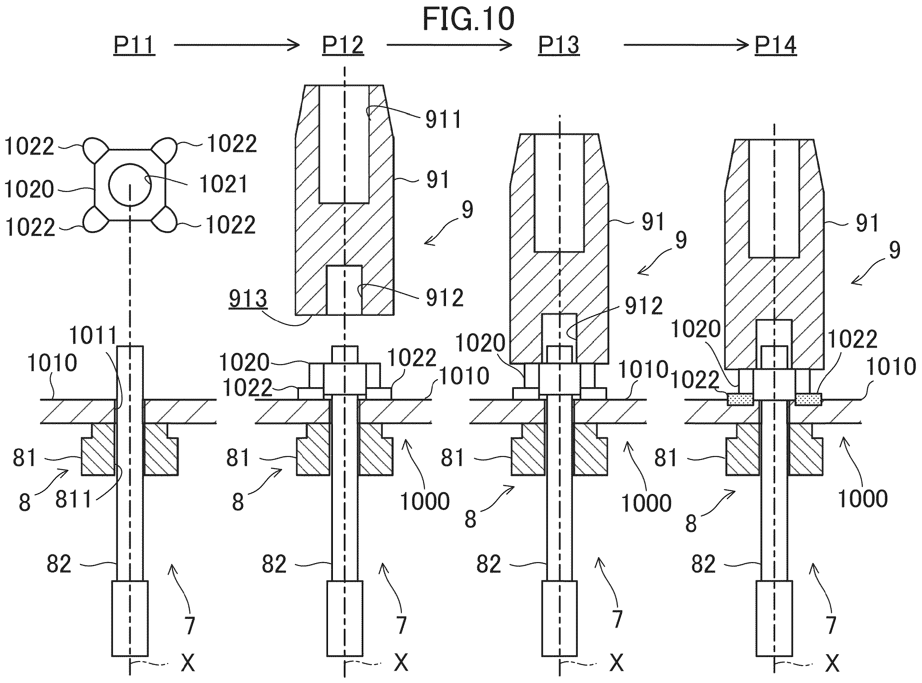

FIG. 10 illustrates, as an example, a part of a structure of a first electrode 8 and a second electrode 9 of a projection welding device 7. A workpiece 1000 to be welded using the projection welding device 7 includes a first welding target member 1010 and a second welding target member 1020. The first welding target member 1010 is in the shape of a flat plate. The first welding target member 1010 has a through hole 1011. The through hole 1011 passes through the first welding target member 1010 in its thickness direction.

The second welding target member 1020 is a nut. The second welding target member 1020 is in a non-plate shape. As shown in a left part of FIG. 10, the second welding target member 1020 is in a substantially square shape in plan view and has a screw hole 1021 at a center portion thereof. The second welding target member 1020 is placed on the first welding target member 1010 so that the screw hole 1021 is coaxial with the through hole 1011 of the first welding target member 1010. The second welding target member 1020 also have projections 1022 at its four corner portions, respectively. Each of the four projections 1022 is in contact with a surface of the first welding target member 1010 in a state where the second welding target member 1020 is placed on the first welding target member 1010.

The first electrode 8 has a cap tip 81 and a guide pin 82. The cap tip 81 is brought into contact with a surface of the first welding target member 1010. The cap tip 81 has a through hole 811. The through hole 811 passes through the cap tip 81 in a central axis X direction.

The guide pin 82 extends in the central axis X direction of the first electrode 8. The guide pin 82 is inserted into the through hole 811 of the cap tip 81. The guide pin 82 is reciprocated in the central axis X direction by an extendable actuator 88, which will be described later. FIG. 10 shows a state in which the guide pin 82 protrudes. The guide pin 82 is inserted into the through hole 1011 of the first welding target member 1010 and the screw hole 1021 of the second welding target member 1020. A tip end of the guide pin 82 protrudes from the second welding target member 1020. The guide pin 82 regulates the relative position between the first welding target member 1010 and the second welding target member 1020 so that the through hole 1011 and the screw hole 1021 are coaxial with each other. The details of the structure of the first electrode 8 will be described later.

A cap tip 91 of the second electrode 9 has a first recess 911 and a second recess 912. The first recess 911 is at a base end portion of the cap tip 91. The first recess 911 opens to a base end of the cap tip 91 and extends in a central axis X direction of the second electrode 9. The first recess 911 forms part of a coolant path 93 of the second electrode 9, as will be described later.

The second recess 912 is at a tip end portion of the cap tip 91. The second recess 912 opens to a tip end surface 913 of the cap tip 91. A portion of the tip end surface 913 of the cap tip 91, which is around the second recess 912 is brought into contact with the second welding target member 1020. The second recess 912 extends in the central axis X direction of the second electrode 9. The first recess 911 and the second recess 912 are not in communication with each other. The tip end of the guide pin 82 is inserted into the second recess 912 when the first electrode 8 and the second electrode 9 sandwich the workpiece 1000 in the central axis X direction.

Now, a welding process using the projection welding device 7 is described.
(1) The first electrode 8 is in contact with the first welding target member 1010, and the guide pin 82 protrudes through the through hole 1011 of the first welding target member 1010 toward the second electrode 9 (see P11 in FIG. 10).
(2) The second welding target member 1020 is fitted around the guide pin 82, and the projections 1022 of the second welding target member 1020 are brought into contact with an upper portion of the first welding target member 1010 (see P12 in FIG. 10).
(3) The tip end surface 913 of the second electrode 9 is brought into contact with the second welding target member 1020, and the first electrode 8 and the second electrode 9 sandwich the workpiece 1000 in the central axis X direction, to supply power to the workpiece 1000 while pressurizing the workpiece 1000 (see P13 in FIG. 10).
(4) The pressurization brings the projections 1022 of the second welding target member 1020 into close contact with the first welding target member 1010, and at the locations of the projections 1022, power distribution paths are formed and Joule heat is generated. The projections 1022 of the second welding target member 1020 and portions of the first welding target member 1010 that are in contact with the projections 1022 are molten (see P14 in FIG. 10).
(5) The molten portions of the first welding target member 1010 and second welding target member 1020 solidify to form nuggets, and the welding process is completed.

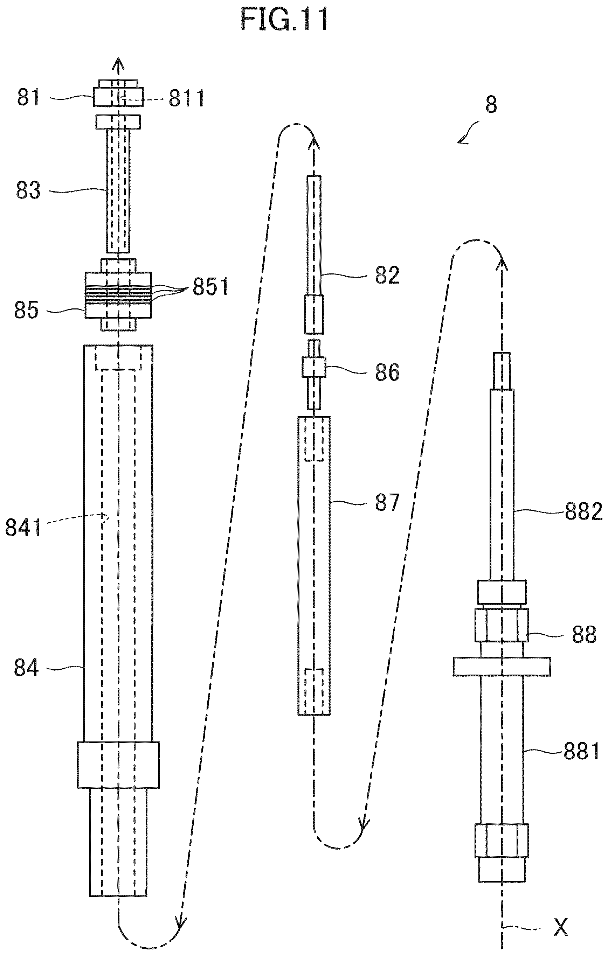

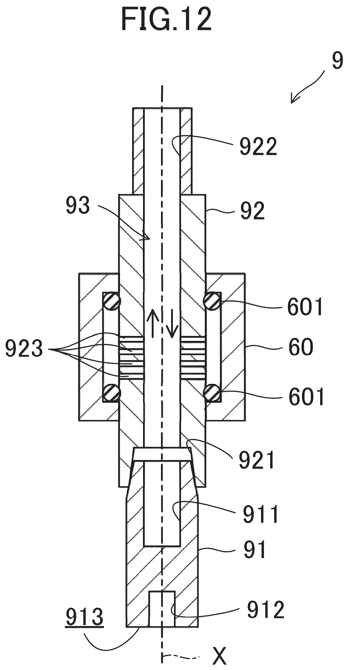

The first electrode 8 and the second electrode 9 of the projection welding device 7 are elastically deformable. This allows even loads to be applied to the four projections 1022 of the second welding target member 1020, thereby allowing the projection welding device 7 to weld the four projections 1022 evenly to the first welding target member 1010. The following describes the structure of the elastically deformable first electrode 8 and second electrode 9 with reference to FIGS. 11 and 12.

FIG. 11 shows an exploded view of the first electrode 8. As described above, the cap tip 81 of the first electrode 8 has the through hole 811. A guide pipe 83 is attached to a base end of the cap tip 81 and holds the cap tip 81. The guide pipe 83 also has an inner hole into which the guide pin 82 is inserted. The guide pipe 83 guides the reciprocating movement of the guide pin 82.

A holder 84 holds the guide pipe 83 and the cap tip 81. The holder 84 is tubular and has a hole 841 into which a rod 87, which will be described later, is inserted. The hole 841 passes through the holder 84 in the central axis X direction.

A first joint 85 is interposed between the holder 84 and the cap tip 81. The first joint 85 is an elastically deformable portion of the first electrode 8. The first joint 85 is tubular and has a through hole passing through the joint in the central axis X direction. The guide pin 82 is inserted into this through hole. The first joint 85 has slits 851. The slits 851 open to an outer circumferential surface of the first joint 85. Each of the slits 851 extends in a circumferential direction in a plane intersecting the central axis X direction, more accurately, in a plane orthogonal to the central axis X direction. The first joint 85 illustrated in FIG. 11, as an example, has three slits 851. The three slits 851 are arranged in the central axis X direction. The number of slits 851 of the first joint 85 is not limited to three. There are one or more columns in each of the slits 851, and a base is defined between two slits 851 adjacent to each other in the central axis X direction. The first joint 85 has two bases. Each of the two bases has an annular shape surrounding the through hole of the first joint 85 and has a thickness that allows the base to elastically deform so as to flex in the central axis X direction. These slits 851 and columns allow the first joint 85 to elastically deform in response to a load in the central axis X direction.

A second joint 86 is interposed between the guide pin 82 and the rod 87. The second joint 86 connects the guide pin 82 and the rod 87 to each other. The rod 87 extends in the central axis X direction. The rod 87 connects the guide pin 82 to the extendable actuator 88.

The extendable actuator 88 includes an air cylinder 881 and a piston rod 882. The piston rod 882 is inserted into the holder 84. The piston rod 882 extends in response to air supply to the air cylinder 881. The extension of the piston rod 882 causes the guide pin 82 to protrude toward the second electrode 9.

Thus, the first electrode 8 has a mechanism that advances and retracts the guide pin 82, and is elastically deformable at the first joint 85, which is between a tip end of the cap tip 81 and a base end of the first electrode 8. **In** a case where the center of a load is offset from the central axis X of the first electrode 8, the first joint 85 is bent, and this allows the cap tip 81 to apply the load through its entire tip end surface uniformly to the first welding target member 1010.

FIG. 12 illustrates, as an example, the structure of the second electrode 9. The second electrode 9 has the coolant path 93 for cooling the cap tip 91. As described above, the cap tip 91 has the first recess 911 and the second recess 912.

A holder 92 holds the cap tip 91. The holder 92 is tubular. The holder 92 has, at its tip end, a holding portion 921. The holding portion 921 is a recess that opens to a tip end surface of the holder 92. The base end of the cap tip 91 is inserted into the holding portion 921 of the holder 92. The first recess 911 of the cap tip 91 is connected to the holding portion 921 of the holder 92.

An inner hole 922 of the holder 92 communicates with the holding portion 921 and opens to a base end of the holder 92. The inner hole 922 forms part of the coolant path 93. A coolant is sent to the first recess 911 of the cap tip 91 through the inner hole 922 and the holding portion 921, and returns from the first recess 911 through the holding portion 921 and the inner hole 922. The above-described inner tube 222 (see FIG. 2) may be disposed in the inner hole 922 of the holder 92 so that the coolant path 93 has a double structure.

The holder 92 of the second electrode 9 has slits 923. The slits 923 open to an outer circumferential surface of the holder 92. Each of the slits 923 extends in a circumferential direction in a plane intersecting the central axis X direction, more accurately, in a plane orthogonal to the central axis X direction. The second electrode 9 illustrated in FIG. 12, as an example, has four slits 923. The four slits 923 are arranged in the central axis X direction. The number of slits 923 of the holder 92 is not limited to four. A base is defined between two slits 923 adjacent to each other in the central axis X direction. The holder 92 has three bases. Each of the three bases has an annular shape surrounding the inner hole 922 forming the coolant path 93, and has a thickness that allows the base to elastically deform so as to flex in the central axis X direction.

Although not shown in detail in FIG. 12, there are a plurality of columns in each slit 923. Each of the columns extends in the central axis X direction and is connected to any of the bases. The second electrode 9 is elastically deformable at the holder 92, which is between the tip end surface 913 of the cap tip 91 and a base end of the second electrode 9. The elastic deformation of the holder 92 allows the tip end surface 913 of the cap tip 91 to apply a uniform load to the second welding target member 1020. The four projections 1022 of the second welding target member 1020 are welded evenly to the first welding target member 1010.

The second electrode 9 has the coolant path 93, and the coolant leaks through the slits 923. The second electrode 9 has a reduction part that reduces coolant leakage. As shown in FIG. 12, the reduction part is, for example, a cover 60 attached to the outer circumferential surface of the holder 92.

The cover 60 covers the respective openings of the four slits 923 opening to the outer circumferential surface of the holder 92. O-rings 601 are interposed between the holder 92 and the cover 60. The O-rings 601 reduce coolant leakage through a gap between the holder 92 and the cover 60.

Thus, the elastic deformation of the second electrode 9 having a cooling structure is achieved by virtue of the slits 923, while reducing coolant leakage.

### (Other Embodiments)

The application of the technique disclosed here is not limited to the spot welding device 1, 10 or the projection welding device 7. As described above, the technique disclosed here makes it possible to apply a load uniformly to a workpiece through the first electrode and the second electrode. With the use of this feature, a workpiece to be welded using the resistance welding device may be, for example, a workpiece including tubular welding target members, which are butted against each other in an axial direction of the members. The resistance welding device can apply a load uniformly to the entire circumference of a joint portion of the welding target members through the first electrode and the second electrode. The resistance welding device can improve welding quality.

The technique disclosed here can also be applied to ring mash welding. In ring mash welding, a first welding target member with a hole and a second welding target member with an outer shape slightly larger than the hole are welded together around the hole along its circumference. The resistance welding device can apply a load uniformly to the welding location around the hole. The resistance welding device improves welding quality in ring mash welding.

Furthermore, it is also possible to combine the features described in the embodiments described above within a feasible range.

### DESCRIPTION OF REFERENCE CHARACTERS

- 100: Workpiece
- 101: Welding Target Member
- 102: Welding Target Member
- 1000: Workpiece
- 1010: First Welding Target Member
- 1020: Second Welding Target Member
- 2: First Electrode
- 20: Second Electrode
- 21: Cap Tip
- 22: Shank
- 220: Shank
- 221: First Hole
- 222: Inner Tube
- 23: Holder
- 24: Feed Path
- 25: Return Path
- 251: Return Path
- 252: Return Path
- 26: Coolant Path
- 31: First Column
- 32: Second Column
- 33: Third Column
- 34: Fourth Column
- 4: Slit
- 41: First Slit
- 42: Second Slit
- 43: Third Slit
- 44: Fourth Slit
- 45: First Base
- 46: Second Base
- 47: Third Base
- 6: Cover
- 60: Cover
- 61: O-ring
- 610: O-ring
- 8: First Electrode
- 81: Cap Tip
- 84: Holder
- 851: Slit
- 9: Second Electrode
- 91: Cap Tip
- 92: Holder
- 922: Inner Hole
- 923: Slit
- 93: Coolant Path

## Claims

1. A resistance welding device for welding a plurality of stacked welding target members of a workpiece by pressurizing the workpiece while supplying power to the workpiece, the resistance welding device comprising
at least one electrode having a tip end surface configured to be in contact with the workpiece, the electrode being configured to pressurize the workpiece and supply power to the workpiece,
the at least one electrode having, at an intermediate portion between the tip end surface and a base end of the electrode, at least one slit opening to an outer circumferential surface of the electrode, the slit extending in a circumferential direction in a plane intersecting a central axis direction of the electrode.

2. The resistance welding device of claim 1, wherein
the at least one electrode comprises a first electrode located on a first side of the workpiece and a second electrode located on a second side of the workpiece with the workpiece sandwiched by the first and second electrodes, and at least one of the first electrode or the second electrode has the at least one slit.

3. The resistance welding device of claim 1 or 2, wherein
an opening of the at least one slit extends, in the outer circumferential surface of the at least one electrode, in a circumferential direction relative to a direction orthogonal to the central axis direction.

4. The resistance welding device of to claim 3, wherein
the at least one slit of the at least one electrode comprises a plurality of slits arranged in the central axis direction.

5. The resistance welding device of claim 4, wherein
the at least one electrode has, at a radially central portion thereof, a hole extending in the central axis direction,
the plurality of slits communicate with the hole and include a first slit and a second slit, and
the at least one electrode includes:
a base defined by the first slit and the second slit adjacent to each other in the central axis direction, the base being in an annular shape surrounding the hole and having a thickness that allows the base to elastically deform so as to flex in the central axis direction; and
columns located in the first slit and the second slit, respectively, each column extending in the central axis direction to be connected to the base.

6. The resistance welding device of claim 5, wherein
a plurality of columns, each extending in the central axis direction to be connected to the base, are located apart from each other in the circumferential direction in each of the first slit and the second slit.

7. The resistance welding device of claim 6, wherein
the plurality of columns in the first slit are offset from the plurality of columns in the second slit in the circumferential direction.

8. The resistance welding device of any one of claims 1 to 4, wherein
the at least one electrode is provided with, at a radially central portion thereof, a coolant path extending in the central axis direction of the electrode,
the at least one slit communicates with the coolant path, and
the at least one electrode includes a reduction part configured to reduce coolant leakage through the at least one slit.

9. The resistance welding device of claim 8, wherein
the reduction part is a cover that is attached to the outer circumferential surface of the at least one electrode and covers the opening of the at least one slit.

10. The resistance welding device of any one of claims 1 to 9, wherein
the at least one electrode includes: a cap tip configured to be in contact with the workpiece; a shank with a tip end, to which the cap tip is attached; and a holder that holds the shank, and
the shank or the holder has the at least one slit.

11. The resistance welding device of any one of claims 1 to 10, wherein
the workpiece includes: a first welding target member that is in a plate shape; and a second welding target member that is in a non-plate shape and is placed on the first welding target member,
the second welding target member has a plurality of projections that are in contact with a surface of the first welding target member, and the first welding target member and the second welding target member are welded to each other at locations of the plurality of projections,
a first electrode of the at least one electrode, configured to be in contact with the first welding target member, has a guide pin configured to penetrate the first welding target member and the second welding target member in the central axis direction, and
a second electrode of the at least one electrode, configured to be in contact with the second welding target member, has a recess, into which the guide pin is inserted, on a tip end surface of the second electrode.
